# EUROPEAN PATENT SPECIFICATION

(11) **EP 2 202 183 B1**
(45) Date of publication and mention of the grant of the patent: **05.11.2014**
(21) Application number: 08832673.1
(22) Date of filing: 11.09.2008
(51) Int. Cl.: B65G 47/90, B65G 47/86, B65G 17/32

(54) **GRIPPER DEVICE FOR CONVEYING CIRCULAR TUBE BODY**
GREIFERVORRICHTUNG ZUR BEFÖRDERUNG VON KREISFÖRMIGEN ROHRKÖRPERN
DISPOSITIF DE PRÉHENSION PERMETTANT DE TRANSPORTER UN CORPS TUBULAIRE CIRCULAIRE

(30) Priority: 20.09.2007 JP 2007243870
(43) Date of publication of application: 30.06.2010
(73) Proprietor: Toyo Seikan Kaisha, Ltd., Shinagawa-ku Tokyo 141-8640 (JP)
(72) Inventor: UEDA, Nobuyuki, Yokohama-shi Kanagawa 230-0001 (JP); UEHARA, Satoshi, Yokohama-shi Kanagawa 230-0001 (JP)
(74) Representative: Müller Schupfner & Partner Patent- und Rechtsanwaltspartnerschaft mbB
(86) International application number: PCT/JP2008/066414
(87) International publication number: WO 2009/038014

(56) References cited:
- WO-A1-03/078285
- WO-A1-2012/035645
- DE-A1- 10 348 431
- JP-A- 5 278 852
- JP-A- 11 314 752
- JP-A- 2006 213 377
- JP-U- 55 058 510
- US-A1- 2005 103 604

## Description

### Technical Field

This invention relates to conveyer apparatus comprising a conveying chain and a gripper device for conveying a cylindrical body and, more particularly, to a device which, in a case where a PET bottle or a preform before forming of a bottle is conveyed by gripping a neck portion of the PET bottle or the preform with a pair of fork-members provided on a conveyer chain, can receive the PET bottle or the preform to be conveyed in a stable manner.

### Background art

A bottle such as a PET bottle is generally used as a container of contents such as a drink. In a bottle forming process and in a process for filling contents in a formed bottle, it is necessary to convey a preform or a formed bottle. Usually, a preform or a formed bottle is conveyed by gripping a coupler (a cylindrical portion) for screwing a cap on or a supporting neck ring (a cylindrical portion) provided in a neck portion of the preform or the formed bottle.

For conveying a preform or a bottle by gripping the neck portion thereof, a gripper having a pair of fork-members which can be opened and closed (see Japanese Patent Application Laid-open Publication No. 11-105116, Japanese Patent Application Laid-open Publication No. 2003-019744 and Japanese Patent Application Laid-open Publication No. 2006-199309). For example, grippers are provided in a plurality of pockets about a rotating wheel to convey bottles on a circumference, or a plurality of grippers are provided on an endless conveying chain provided between sprocket wheels to convey bottles on a straight line. Conveying in the respective processes is made by passing bottles by repeating gripping at the neck ring and gripping at the coupler of the bottle.

In a chain type conveying apparatus which is one of such conveying apparatus using a gripper, a slide table is provided under a conveying chain between sprocket wheels to slide the conveying chain along this slide table. Alternatively, the conveying chain is guided by a chain guide. Weight of a bottle which is gripped by a gripper is supported by such slide table or chain guide whereby the bottle can be conveyed in a stable posture.

DE 10348431 A1 teaches an apparatus for palletizing objects such as bottles comprising a conveyer. The conveyer comprises a chain which is surrounded by a C-shaped cage wherein rollers run to reinforce the chain. The C-shaped cage has a lateral opening wherein an arm in the form of a bracket is arranged for carrying a gripper device underneath the cage, the gripper device being furnished with pivotable gripper arms for capturing a bottle at the bottle neck close to the opening. This document discloses the features of the preamble of claim 1.

### Disclosure of the Invention

When a bottle is passed to a gripper provided on the conveying chain by pushing the bottle into the opened gripper or by pushing open the gripper by the force of the bottle, the conveying chain is pushed and moved due to deflection or stretching of the conveying chain and, as a result, difficulty arises in accurately positioning the bottle in the gripping portion of the fork-members in passing of the bottle. Besides, the gripper which has received the bottle tends to be inclined resulting in damage to the bottle during conveying or occurrence of inconvenience in a next process. Particularly, in a case where the bottle is conveyed to a filling process after forming of the bottle, it is sometimes carried out to invert the bottle to an upside-down state to prevent intrusion of dust or the like. In this case, center of gravity of the bottle is lifted to a higher position and the bottle tends to fall over resulting in further difficulty in accurate passing of the bottle.

The present invention has been made in view of the above problems of the prior art. It is an object of the invention to provide a gripper device for conveying a cylindrical body which can pass a bottle or the like in a stable manner without inclination and conveying the bottle by firmly gripping it notwithstanding that the gripper is mounted on a conveying chain.

For achieving the object of the invention, in a first aspect of the invention, there is provided a conveyer apparatus according to claim 1.

A second aspect of the invention and a third aspect of the invention are disclosed in claims 2 and 3.

According to the first aspect of the invention, the gripper device for conveying a cylindrical body comprises a fixed frame which is fixed to a conveying chain and is moved and conveyed integrally with the chain, a pair of fork-members each being pivotably mounted on the fixed frame to pivot in opening and closing directions and having gripping portions for gripping a cylindrical body, energizing means provided on the side of the pivoting positions of the fork-members opposite to the gripping portions for energizing the gripping portions in closing direction, and a guide member provided at least in a passing section of the conveying chain and contacting a side surface of the fixed frame extending in the conveying direction of the fixed frame in sliding contact to maintain the posture of the fork-members and, therefore, a cylindrical portion such as a bottle neck portion can be gripped firmly by the energizing means which energizes the gripping portions of the pair of fork-members in closing direction and, by causing the surface of the fixed frame to contact the guide member in at least the passing section of the conveying chain, the posture of the fork-members in passing of a cylindrical body such as a bottle can be stabilized whereby passing can be made by gripping and accurately positioning a predetermined position of the neck portion.

According to the second aspect of the invention, the guide member is provided in a straight passing section in the vicinity of a sprocket wheel of the conveying chain and, therefore, passing can be made by holding influence of stretching of the conveying chain at the minimum.

According to the third aspect of the invention, toothed portions are provided in the vicinity of the pivoting positions of the fork-members, said toothed portions being in meshing engagement with each other to open and close the gripping portions uniformly and, therefore, the fork-members can be closed and opened uniformly by the toothed portions whereby the cylindrical body can be gripped in the center and accuracy in positioning can be further improved.

### Brief Description of the Drawings

FIG. 1 is a schematic perspective view of a part of the gripper device for conveying a cylindrical body in the conveyor of the invention applied to conveying of a PET bottle.
FIG. 2 is a schematic sectional view of the conveyer of the invention applied to conveying of a PET bottle.
FIGs. 3A and 3B are a plan view and a partially enlarged view of a part of the gripper device in the conveyer of the invention applied to conveying of a PET bottle.
FIG. 4 is an explanatory view showing a passing section of the conveyer of the invention applied to conveying of a PET bottle.

### Description of Preferred Embodiments of the Invention

Description will now be made in detail about embodiments of the invention with reference to the accompanying drawings.

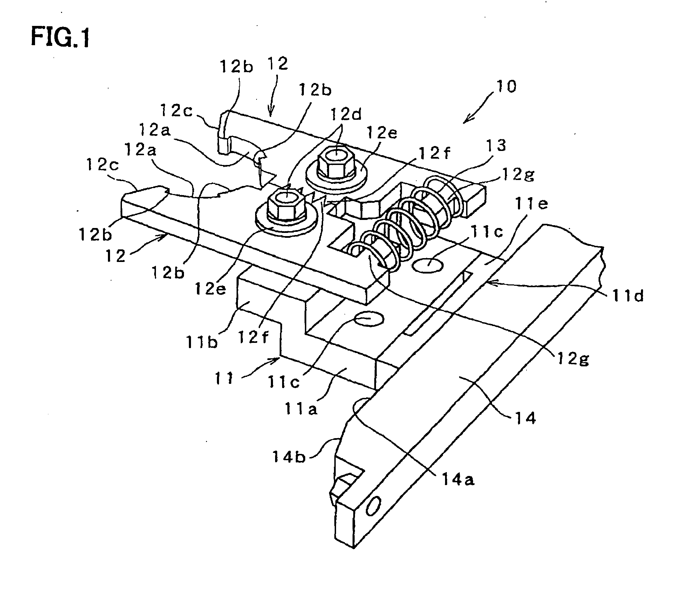

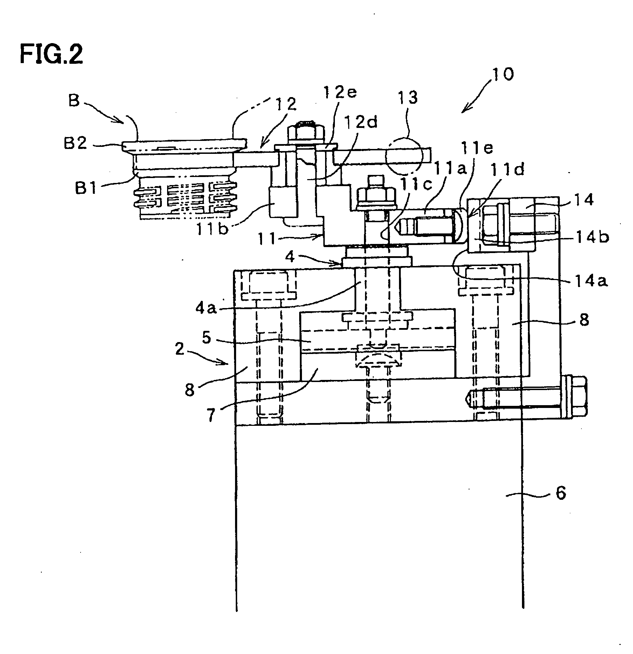

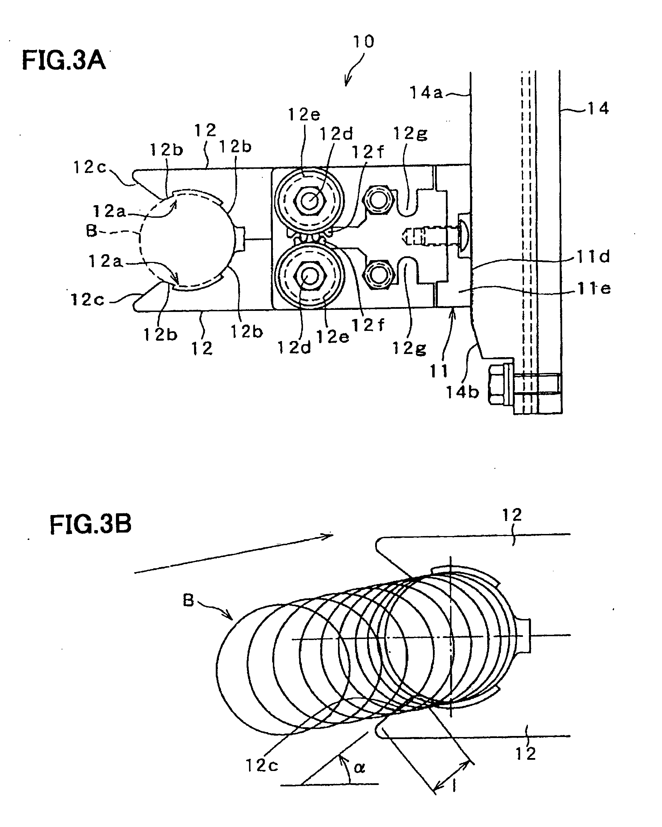

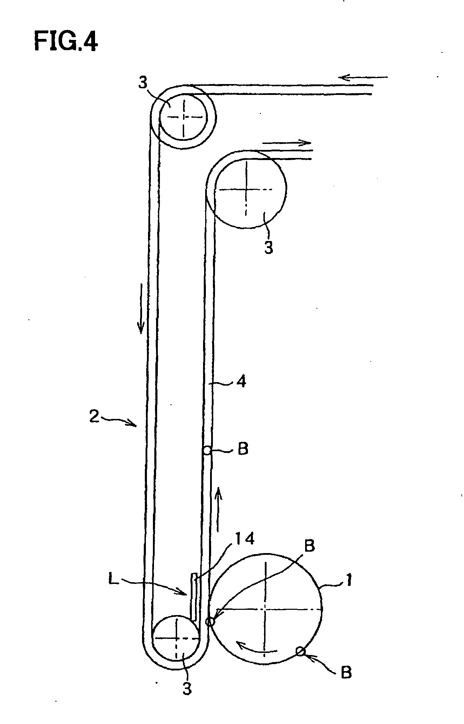

FIGs. 1 to 4 show an embodiment of the gripper device for conveying a cylindrical body, namely a PET bottle. FIG. 1 is a schematic perspective view of a part of the device, FIG. 2 is a sectional view of the part of the device, FIGs. 3A and 3B are a plan view and a partially enlarged view of the part of the device, and FIG. 4 is an explanatory view showing a passing section on the conveying chain.

A gripper device for conveying a cylindrical body (hereinafter referred simply to as "gripper device") 10 is provided, as shown in FIG. 4, on a conveying chain 4 provided between sprocket wheels 3, 3 of a chain type conveyer apparatus 2 for conveying a bottle B received from a turret 1 of a preceding process such as a process for forming a bottle to a subsequent process such as a process for filling contents in the bottle. The gripper device 10 conveys the bottle B along the conveying chain 4 on a straight line (a straight line bending at right angle in the illustrated example).

This gripper device 10 comprises a fixed frame 11 which is fixed to the conveying chain 4 and is moved integrally with the conveying chain 4. As shown in FIGs. 1 and 2, the fixed frame 11 is made of a base fixed portion 11a fixed to the conveying chain 4 and a front mounting portion 11b projecting forwardly from the base fixed portion 11a, the portions 11a and 11b being formed integrally with a step being formed between the portions 11a and 11b. The fixed frame 11 is fixed to links of the chain 4 by means of bolts and nuts through two mounting holes 11c formed in the base fixed portion 11a.

A pair of fork-members 12 is mounted on the fixed frame 11 in such a manner that the fork-members 12 can be opened and closed. The fork-members 12 are formed with two generally arcuate gripping portions 12a each of which comprises two projecting portions 12b for gripping a coupler B1 formed in the neck portion of the bottle B for screwing a cap thereon and a supporting neck ring B2 and also comprises a recessed portion between the two projecting portions 12b. The gripping portions 12a are respectively formed in a manner to oppose each other. By closing the pair of fork-members 12, the bottle B is gripped by contacting the projecting portions 12b in about half of the outer periphery of the neck portion of the bottle B. In the tip end portions of the the fork-members 12 in front of the gripping portions 12a are formed two guiding tapered surfaces 12c facing each other and continuously to the generally arcuate gripping portions 12a. These guiding tapered surfaces 12c function to cause pushing force of the neck portion of the bottle B to act in a direction to open the fork-members 12, when the neck portion of the bottle B comes into contact with these guiding tapered surfaces 12c

Considering locus of passing of the bottle B which is passed with a certain angle to the center line of the fork-members 12, as shown in FIG.3A for example, the length 1 and the angle α of the guiding tapered surfaces 12c are set in such a manner that shock received in passing of the bottle can be minimized wherebby scratching on the outer surface of the bottle B can be prevented and the fork-members 12 can be opened sufficiently with a minimum force possible. More specifically, the length 1 of the guiding tapered surfaces 12c toward the tip end of the guiding tapered surfaces 12c is set to sufficient length which will avoid abuting of the bottle B to the tip end portion of the guiding tapered surfaces 12c, whereas the angle α is set to an angle at which the bottle B can contact the guiding tapered surfaces 12c smoothly and impart force to the guiding tapered surfaces 12c to open them.

The pair of fork-members 12 are fastened to the front mounting portion 11b of the fixed frame 11 by means of bolts and spring washers via fixing pins 12d and presser rings 12e and thereby pivotably mounted on the fixed frame to pivot in opening and closing directions. In the inner side surface of each of the fork-members 12, there is provided a toothed portion 12f in an arcuate form which is concentric with the fixing pin 12d. The toothed portions 12f are in meshing engagement with each other and, by pivoting movement of the pair of fork-members 12 by the same angle, the fork-members 12 are opened or closed uniformly whereby the fork-members 12 can grip the bottle B on both sides and position the bottle B at a desired position such that the central axis of the bottle B aligns with the center of the gripping portions 12a.

The pair of fork-members 12 comprise, as the energizing means for energizing the gripping portions 12a in closing direction, a compression spring 13 which is provided on the side of the fixing pins 12d of the fork-members 12 opposite to the gripping portions 12a between spring supporting projections 12g formed in the base portion of the fork-members 12 to face each other. By this arrangement, when the neck portion of the bottle B is pushed onto the guiding tapered surfaces 12c of the gripping portions 12a, the pushing force of the bottle B acts in the direction to open the fork-members 12 and the bottle B thereby can be mounted in the gripping portions 12a and can be gripped automatically and this gripping state can be held accurately and firmly.

For preventing scratching on the outer surface of the bottle B while it is gripped, surface treatment such as plating may be applied to the surface of the fork-members 12 or, alternatively, a buffer material such as synthetic resin or elastic material may be provided on the surface of the fork-members which contacts the bottle B.

A plurality of the pair of fork-members 12 having the gripping portions 12a are mounted at a predetermined pitch to the conveying chain 4 via the fixed frames 11 to constitute the chain type conveying apparatus 2. For supporting weight of the bottles B which are conveyed and ensuring stable conveying of the bottles B, circular slide plates 5 are fixed to the bottom surface of the conveying chain 4 and the conveying chain 4 moves in sliding movement on a slide rail 7 made of resin and mounted to a frame 6. A chain guide 8 of an inverted L-shape is fixed to the frame 6 on either or both sides in the conveying direction for guiding roller links 4a of the conveying chain 4. By guiding the conveying chain 4 by the slide rail 7 and the chain guide 8, the weight of the fixed frame 11, fork-members 12 and conveying chain 4 including the bottles B can be supported and, in addition to it, movement in a direction other than the conveying direction can also be supported to some extent.

However, when the bottle B is passed to the gripping portions 12a of the pair of fork-members 12, the fixed frame 11 is pushed through the fork-members 12 whereby the conveying chain 4 is also pushed to be bent between the sprocket wheels 3, 3 and also to move in a horizontal plane in a direction normal to the conveying direction in a gap between the conveying chain 4 and the chain guide 8. The fork-members 12 and the fixed frame 11 also tend to incline by pivoting about their horizontal axis.

In the gripper device 10, a guide member 14 is provided which has a sliding guide surface 14a which contacts, in sliding contact, a rear end surface 11d of the fixed frame II on the opposite side of the front end portion II b where the fork-members 12 are connected to the fixed frame II. The rear end surface IId is a side surface of the fixed frame 11 extending in the conveying direction of the fixed frame 11. This guide member 14 is fixed to the passing section L for the conveying chain 4.

This guide member 14 is formed in the upstream side of the conveying direction with a guiding inclined surface 14b which is cut obliquely so as to contact the moving fixed frame 11 smoothly.

In this gripper device 10, the passing section L in which the guide member 14 is provided as near as possible to the sprocket wheel 3 of the conveying chain 4 so that influence (i.e., stretching of the chain multiplied by the number of links) caused by stretching of the conveying chain 4 can be held at the minimum.

A liner 11e made of a metal or synthetic resin which is of a relatively small friction coefficient is attached to the rear end surface 11d of the fixed frame 11 by means of a bolt to reduce resistance in the sliding movement.

Alternatively, by properly cutting the rear end surface 11d to reduce friction coefficient, the liner 11e can be made integral with the fixed frame 11.

In the gripper device 10 constructed in the above described manner, conveying is made in such a manner that the perpendicular surface of the liner 11e attached to the rear end surface 11d of the fixed frame 11 to which the pair of fork-members 12 are attached contacts the perpendicular sliding guide surface 14a of the guide member 14 and, therefore, the gripping portions 12a of the fork-members 12 can be supported against horizontal force (pushing force) acting in a direction normal to the conveying direction and moment (inclining force) about the horizontal axis of the fork-members 12 applied to the gripping portions 12a whereby the bottle B can be passed to the gripping portions 12a of the fork-members 12 which holds a correct posture and positioning can be made at high accuracy notwithstanding that the fork-members 12 are attached to the conveying chain 4.

Further, the pair of fork-members 12 comprise, as energizing means for energizing the gripping portions 12a in closing direction, a compression spring 13 which is provided on the side of the fixing pins 12d of the fork-members 12 opposite to the gripping portions 12a, a cylindrical body such as a neck portion of the bottle B can be automatically gripped firmly simply by pushing the cylindrical body into the gripping portions 12a whereby the cylindrical body such as the bottle can be conveyed while it is gripped by the fork-members 12 and maintains a stable posture.

In the above described structure, the fork-members 12 of the gripper device 10 are energized in closing direction by the energizing means 13 and, when a cylindrical body such as the body B is passed, the fork-members 12 are forced open against the force of the energizing means. Alternatively, instead of the above opening structure, the fork-members 12 may be closed and opened by a mechanical means such as a cam mechanism. In this case, a cam may be provided integrally with the guide member 14 so that, in the passing section L, i.e., while the fork-members 12 are in sliding contact with the sliding guide surface 14a of the guide member 14, the fork-members 12 will be opened and closed to perform passing of the cylindrical body.

Since the guide member 14 is provided in the straight passing section L in the vicinity of the sprocket wheel 3 of the conveying chain 4, passing can be made with influence by stretching of the conveying chain 4 being held at the minimum.

The toothed portions 12f are provided about the fixing pins 12d of the fork-members, the toothed portions being in meshing engagement with each other to open and close the gripping portions uniformly and, therefore, the fork-members 12 can be closed and opened uniformly by the toothed portions 12f whereby the cylindrical body can be gripped in the center and accuracy in positioning can be further improved.

In the gripper device 10 in which the slide plates 5 of the conveying chain 4 slide over the slide rail 7, friction powder is produced in some rare cases. Normally, by conveying the bottle B in an inverted state, intrusion of the friction powder into the bottle B can be prevented.

In a case, however, where the conveying chain 4 is moved at a high speed or the chain type conveying apparatus 2 is installed in some special environment, production of the friction powder may increase.

In this case, scattering of the friction powder can be prevented by providing the chain guide 8 for guiding the conveying chain 4 on both sides of the conveying chain 4 over substantially all length of the conveying chain 4. Alternatively, the nozzle opening portion of the bottle B may be substantially covered by a lid plate which may be provided adjacent to the fork-members 12 so that intrusion of the friction powder into the bottle B will be prevented.

Alternatively further, a vacuum type dust collecting device may be provided to collect the friction powder. In this case, friction powder collection efficiency will be improved by combining the dust collection device with covering by the chain guide 8.

It is also possible to provide a pan on the floor of the chain type conveying apparatus 2 and washing the chain type conveying apparatus 2 by scattering water on the apparatus 2 by means of a shower to remove the friction powder. In this case, the conveying chain 4 should preferably be made of stainless steel to prevent occurrence of stain on the conveying chain 4.

In the above described embodiment, the side surface of the fixed frame contacts the guide member in sliding contact for guiding. Alternatively, plural surfaces such as upper and lower surfaces continuing to the side surface of the fixed frame may be guided by a guide member. It will suffice if at least the side surface of the fixed frame is guided.

Instead of constituting the guide member with synthetic resin or metal, the guide member may be constructed in such a manner that it can be exchanged in a simple manner, e.g., by fixing a liner to the guide member by means of a bolt.

As to the chain conveying apparatus, various modifications may be made such, for example, that a part of sprocket wheels may be made movable so that, without changing the entire length of the chain, the conveying distance to a next process may be changed according to the number of bottles to be held by the conveying apparatus.

## Claims

1. A conveyer apparatus (2) comprising a conveying chain (4) and a gripper device (10) for conveying a cylindrical body (B),
wherein the gripper device (10) comprises:
a fixed frame (11) which is fixed to the conveying chain (4) and is moved and conveyed integrally with the conveying chain (4);
a pair of fork-members (12) each being pivotably mounted on the fixed frame (11) to pivot in opening and closing directions and having gripping portions (12a) for gripping the cylindrical body (B);
and energizing means (13) provided on the side of the pivoting positions of the fork-members (12) opposite to the gripping portions (12a) for energizing the gripping portions (12a) in closing direction; **characterized in that** the conveyor (2) further comprises
a guide member (14) provided at least in a passing section (L) of the conveying chain (4) and contacting a side surface (11d/11e) of the fixed frame (11) extending in the conveying direction of the fixed frame (11) in sliding contact to maintain the posture of the pair of fork-members (12).

2. The conveyer apparatus (2) as defined in claim 1 wherein the guide member (14) is provided in a straight passing section (L) in the vicinity of a sprocket wheel (3) of the conveying chain (4).

3. The conveyer apparatus (2) as defined in claim 1 or 2 further comprising toothed portions (12f) provided in the vicinity of the pivoting positions of the fork-members (12), said toothed portions (12f) being in meshing engagement with each other to open and close the gripping portions (12a) uniformly.

## Patentansprüche

1. Fördervorrichtung (2), die eine Förderkette (4) und eine Greifeinrichtung (10) zum Fördern eines zylindrischen Körpers (B) aufweist,
wobei die Greifeinrichtung (10) aufweist:
einen befestigten Rahmen (11), welcher an der Förderkette (4) befestigt ist und in einem Stück mit der Förderkette (4) bewegt und befördert wird;
ein Paar von Gabelementen (12), wovon jedes schwenkbar auf dem befestigten Rahmen (11) befestigt ist, um in Öffnungs- und Schließrichtung zu schwenken, und die Greifabschnitte (12a) haben, um den zylindrischen Körper (B) zu ergreifen; und
Antriebseinrichtung (13) vorgesehen auf der Seite der Schwenkpositionen der Gabelelemente (12) gegenüber den Greifabschnitten (12a) zum Antreiben der Greifabschnitte (12a) in Schließrichtung,
**dadurch gekennzeichnet, dass** die Fördervorrichtung (2) ferner aufweist:
ein Führungselement (14), das wenigsten in einem Durchlaufbereich (L) der Förderkette (4) vorgesehen ist und eine Seitenoberfläche (11d/11e) des sich in der Förderrichtung erstreckenden befestigten Rahmens (11) in Gleitkontakt berührt, um die Stellung des Paares der Gabelelemente (12) aufrechtzuerhalten.

2. Fördervorrichtung (2) nach Anspruch 1, wobei das Führungselement (14) in einem geraden Durchlaufabschnitt (L) in der Nähe eines Kettenzahnrades (3) der Förderkette (4) vorgesehen ist.

3. Fördervorrichtung (2) nach Anspruch 1 oder 2, die ferner in der Nähe der Schwenkpositionen der Gabelelemente (12) vorgesehene gezahnte Abschnitte (12f) aufweist, wobei die gezahnten Abschnitte (12f) in gegenseitigem Eingriff miteinander stehen, um die Greifabschnitte (12a) gleichartig zu öffnen und zu schließen.

## Revendications

1. Appareil de transport (2), comprenant une bande transporteuse (4) et un dispositif de préhension (10) permettant de transporter un corps cylindrique (B), dans lequel le dispositif de préhension (10) comprend :
un cadre fixe (11) qui est fixé à la bande transporteuse (4) et est déplacé et transporté intégralement avec la bande transporteuse (4) ;
une paire d'éléments fourchus (12), chacun étant monté de manière pivotante sur le cadre fixe (11) de façon à pivoter dans les sens d'ouverture et de fermeture et ayant des parties préhension (12a) permettant de saisir le corps cylindrique (B) ;
et des moyens de mise en mouvement (13) prévus sur le côté des emplacements pivotants des éléments fourchus (12) opposés aux parties préhension (12a) et permettant de mettre en mouvement les parties préhension (12a) dans le sens de la fermeture ; **caractérisé en ce que** l'appareil de transport (2) comprend en outre :
un élément de guidage (14) prévu au moins dans une section de passage (L) de la bande transporteuse (4) et rentrant en contact avec une surface latérale (11d/11e) du cadre fixe (11) s'étendant dans le sens de transport du cadre fixe (11) en contact de glissement afin de maintenir la position de la paire d'éléments fourchus (12).

2. Appareil de transport (2) selon la revendication 1, dans lequel l'élément de guidage (14) est prévu dans une section de passage droite (L) au voisinage du pignon (3) de la bande transporteuse (4).

3. Appareil de transport (2) selon la revendication 1 ou 2, comprenant en outre des parties dentées (12f) prévues au voisinage des emplacements pivotants des éléments fourchus (12), lesdites parties dentées (12f) étant en prise d'engrenage l'une avec l'autre pour ouvrir et fermer les parties préhension (12a) uniformément.
